# EUROPÄISCHE PATENTSCHRIFT

(11) **EP 3 636 919 B1**
(45) Veröffentlichungstag und Bekanntmachung des Hinweises auf die Patenterteilung: **12.01.2022**
(21) Anmeldenummer: 19202219.2
(22) Anmeldetag: 09.10.2019
(51) Int. Cl.: F04B 15/02, F04B 17/06, B60Q 1/30, B60Q 1/26, B60Q 3/30, F04B 39/00

(54) **MOBILE DICKSTOFFPUMPE**
MOBILE THICKENER PUMP
POMPE À PURIN MOBILE

(30) Priorität: 11.10.2018 DE 102018125163
(43) Veröffentlichungstag der Anmeldung: 15.04.2020
(73) Patentinhaber: Schwing GmbH, 44653 Herne (DE)
(72) Erfinder: RABSAHL, Rudolf, 44339 Dortmund (DE); STREIER, Boris, 45659 Recklinghausen (DE)
(74) Vertreter: Schneiders & Behrendt Bochum

(56) Entgegenhaltungen:
- DE-A1- 2 947 680
- DE-U1-202016 007 988
- Putzmeister Holding GmbH: "Zubehörkatalog PUMI® 21-3 | 25-4 | 28-4", , 31. Dezember 2016 (2016-12-31), Seiten 1-31, XP002797527, Gefunden im Internet: URL:https://www.putzmeister.com/de/web/eur ope/ersatzteile [gefunden am 2020-02-01]
- Mustang-Trailers A/s: "Min Amigo / Bilens nye ven", FDM's member magazine "Motor" 4/2015, 30. April 2015 (2015-04-30), Seite 47, XP055666674, Denmark Gefunden im Internet: URL:http://mustang-amigo.dk/files/Min_Amig o.pdf [gefunden am 2020-02-10]

## Beschreibung

Die Erfindung betrifft eine mobile Dickstoffpumpe zur Förderung von Dickstoff, mit einem Fahrgestell, einer auf dem Fahrgestell angeordneten Pumpeinheit, einem oben offenen Aufgabetrichter zur Aufgabe von zu förderndem Dickstoff, einem verschwenkbaren Deckel, wobei der Deckel in einer Verschlussschwenkstellung die obere Einfüllöffnung des Aufgabetrichters verschließt und in einer Öffnungsschwenkstellung die Einfüllöffnung des Aufgabetrichters freigibt, und einer Heckbeleuchtung.

Aus dem Stand der Technik sind beispielsweise aus DE 29 47 680 A1 oder aus Mustang-Trailers A/s: "Min Amigo / Bilens nye ven", FDM's member magazine "Motor" 4/2015, 30. April 2015, Seite 47, Lastenanhänger bekannt. In letzterem Dokument ist zu erkennen, dass die Heckbeleuchtung des Anhängers zur Ermöglichung einer niedrigen Ladekante am Deckel des Anhängers angebracht ist.

Aus dem Stand der Technik bekannte Dickstoffpumpen weisen starr mit dem Fahrgestell gekoppelte Heckbeleuchtungen auf, welche beispielsweise ein dauerhaft in einer bestimmten Position in Bezug auf das Fahrgestell ausgerichtetes Rücklicht umfassen. Problematisch an den aus dem Stand der Technik bekannten, starren Rücklichthalterungen ist, dass diese meist aus der Kontur des Fahrgestells hervorstehen. Im Baustellenbetrieb sind derartige Halterungen anfällig für Beschädigungen durch Kollisionen.

Aus dem Stand der Technik sind auch schwenkbare, klappbare bzw. verstellbare Vorrichtungen bekannt, um die Heckbeleuchtungen im Baustellenbetrieb besser vor Kollisionen zu schützen, während die Heckbeleuchtungen im Straßenbetrieb möglichst breit bzw. außen positioniert werden. Eine solche Vorrichtung ist beispielsweise aus der DE 20 2016 007 988 U1 oder aus dem Zubehörkatalog PUMI^{®} 21-3 | 25-4 | 28-4 von 2016, Seiten 1-31 bekannt. Nachteilig an der hier beschrieben Lösung ist, dass die Heckbeleuchtung im Baustellenbetrieb unterhalb des Aufgabetrichters angeordnet ist und damit in einem Bereich, der bei Aufgabe von zu förderndem Dickstoff leicht verschmutzt. Außerdem befindet sich die Heckbeleuchtung im Baustellenbetrieb weiterhin in einem Bereich, in dem leicht Beschädigungen beim Heranfahren von Fahrmischern an den Aufgabetrichter entstehen können. So wird die Heckbeleuchtung bei Aufgabe von zu förderndem Dickstoff, insbesondere Beton, leicht beschädigt bzw. verunreinigt und steht ferner im Weg, was weiterhin zu Kollisionen führen kann.

Es ist daher Aufgabe der Erfindung, eine verbesserte Dickstoffpumpe anzugeben, die eine einfache und sichere Anordnung der Heckbeleuchtung im Baustellenbetrieb ermöglicht. Insbesondere sollen Beschädigungen und Verunreinigungen der Heckbeleuchtung bei Aufgabe von zu förderndem Dickstoff in den Aufgabetrichter über dessen obere Einfüllöffnung vermieden werden.

Gelöst wird diese Aufgabe durch eine Dickstoffpumpe mit den Merkmalen des Anspruchs 1.

Dadurch, dass die Heckbeleuchtung an dem verschwenkbaren Deckel angeordnet ist und zusammen mit dem Deckel verschwenkbar ausgebildet ist, kann auf einfache Weise eine sichere Anordnung der Heckbeleuchtung bei Aufgabe von zu förderndem Dickstoff in den Aufgabetrichter ermöglicht werden. Hierzu wird die Heckbeleuchtung an dem verschwenkbaren Deckel mit diesem zusammen verschwenkt. So ist die Heckbeleuchtung auf der Baustelle im Pumpbetrieb der Dickstoffpumpe während der Aufgabe von zu förderndem Dickstoff in den Aufgabetrichter nicht im Weg. In Öffnungsschwenkstellung des Deckels wird die Heckbeleuchtung mit verschwenkt, so dass sie nicht durch Dickstoff bei der Aufgabe in den Aufgabetrichter verschmutzt wird. Über die Verschwenkung der Heckbeleuchtung zusammen mit dem verschwenkbaren Deckel ist besonders einfach eine sichere Position für die Heckbeleuchtung einstellbar.

Die Heckbeleuchtung wird vorzugsweise durch zwei rote Rückstrahler gebildet. Weiterhin umfasst die Heckbeleuchtung vorzugsweise zwei Fahrtrichtungsanzeiger, die weiter vorzugsweise als gelbe Blinkleuchten ausgebildet sind. Zudem kann die Heckbeleuchtung zwei rote Schlussleuchten umfassen, die das Ende des Fahrzeugs signalisieren. Außerdem kann die Heckbeleuchtung zwei Bremsleuchten aufweisen, die eine Bremsung des Fahrzeuges anzeigen. Außerdem können Rückfahrscheinwerfer, Nebelschlussleuchten und eine Kennzeichenbeleuchtung von der Heckbeleuchtung umfasst sein.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass die Heckbeleuchtung in Verschlussschwenkstellung des Deckels entgegen der Fahrtrichtung des Fahrgestells ausgerichtet ist. Mit der Ausrichtung der Heckbeleuchtung in Verschlussschwenkstellung entgegen der Fahrtrichtung des Fahrgestells kann das Ende des Fahrgestells auch bei Dämmerung, Dunkelheit oder bei schlechten Witterungsverhältnissen von nachfolgenden Verkehrsteilnehmern sicher wahrgenommen werden. Die Ausrichtung der Heckbeleuchtung ist durch die Hauptabstrahlrichtung der die Heckbeleuchtung bildenden Leuchten gegeben, welche in Verschlussschwenkstellung des Deckels hauptsächlich entgegen der Fahrtrichtung des Fahrgestells leuchten.

Besonders bevorzugt ist eine Ausführungsform, die vorsieht, dass der Deckel im Bereich seiner fahrtrichtungsseitigen Kante verschwenkbar angelenkt ist, so dass er aus der Verschlussschwenkstellung, in der der Deckel im Wesentlichen horizontal ausgerichtet ist, in die Öffnungsschwenkstellung, in der der Deckel im Wesentlichen vertikal ausgerichtet ist, in Fahrtrichtung nach oben verschwenkt wird. Mit der Öffnung des verschwenkbaren Deckels kann die Heckbeleuchtung einfach in eine Position vorne über dem Aufgabetrichter gebracht werden, wo die Heckbeleuchtung gegenüber Verschmutzungen und Beschädigungen während der Aufgabe von zu förderndem Dickstoff in den Aufgabetrichter sicher ist.

Eine besonders vorteilhafte Ausführung der Erfindung bezieht sich darauf, dass die Heckbeleuchtung über einen Hilfsrahmen an dem Deckel befestigt ist. Mit der Befestigung der Heckbeleuchtung über den Hilfsrahmen kann die Anordnung der Heckbeleuchtung unabhängig von der Form des Deckels erfolgen. So lassen sich gesetzliche Vorgaben für die Anordnung der Heckbeleuchtung einfach und unabhängig von der Ausgestaltung des Deckels und des Aufgabetrichters realisieren.

Eine besonders vorteilhafte Ausführung der Erfindung sieht vor, dass der Hilfsrahmen über die Breite des Deckels quer zur Fahrtrichtung des Fahrgestells hinausragt und die Heckbeleuchtung zumindest teilweise in Fahrtrichtung des Fahrgestells versetzt seitlich neben dem Deckel an dem Hilfsrahmen angeordnet ist. Bei besonders breiten Fahrzeugen, wie etwa Autobetonpumpen, kann es erforderlich sein, zur Einhaltung des gesetzlichen Maximalabstandes von beispielsweise Blinkleuchte und Schlussleuchte zur Außenseite des Fahrzeugs die Heckbeleuchtung teilweise in Fahrtrichtung des Fahrgestells seitlich neben dem Deckel an dem Rahmen anzuordnen. Auf diese Weise lassen sich Teile der Heckbeleuchtung sehr einfach unabhängig von der Form des Deckels und des Ausgabetrichters in Fahrtrichtung seitlich neben diesem anordnen.

Eine vorteilhafte Ausführung der Erfindung sieht vor, dass an dem Deckel eine Arbeitsleuchte angeordnet ist, die in Öffnungsschwenkstellung des Deckels den Aufgabetrichter von oben beleuchtet. Mit einer solchen Arbeitsleuchte kann in Öffnungsschwenkstellung des Deckels der Aufgabetrichter, dessen obere Einfüllöffnung und der Bereich um den Aufgabetrichter ausreichend ausgeleuchtet werden, damit auch bei Dämmerung oder Dunkelheit eine sichere Arbeit möglich ist.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäße Dickstoffpumpe,
- Figur 2: Dickstoffpumpe mit geöffnetem Deckel,
- Figur 3: Rückansicht der Dickstoffpumpe,

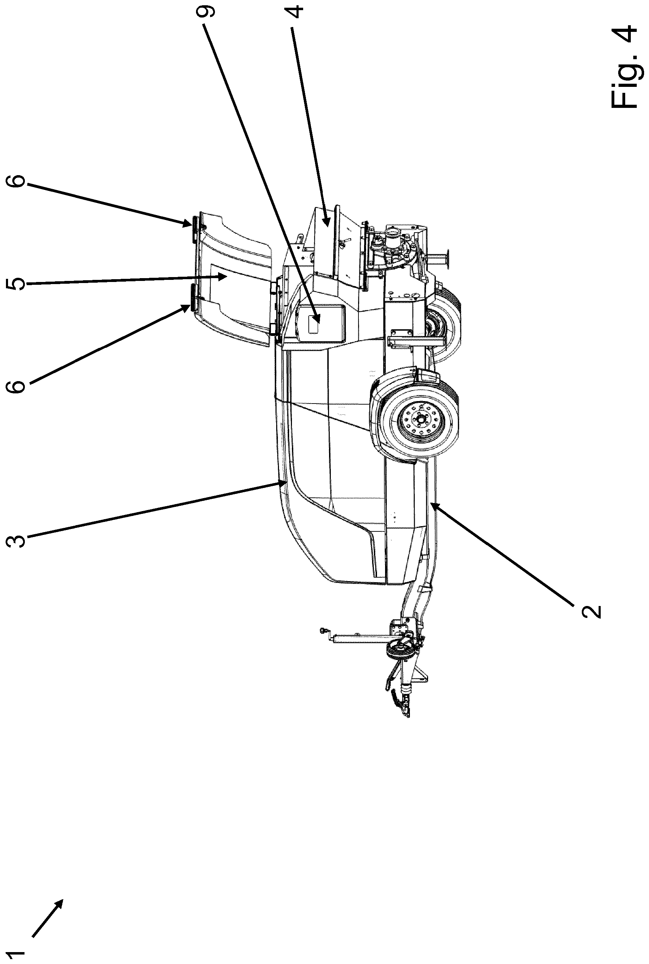

- Figur 4: Seitenansicht der Dickstoffpumpe und
- Figur 5: Detailansicht zu Deckel
- Figur 6: Seitenansicht des verschlossenen Deckels

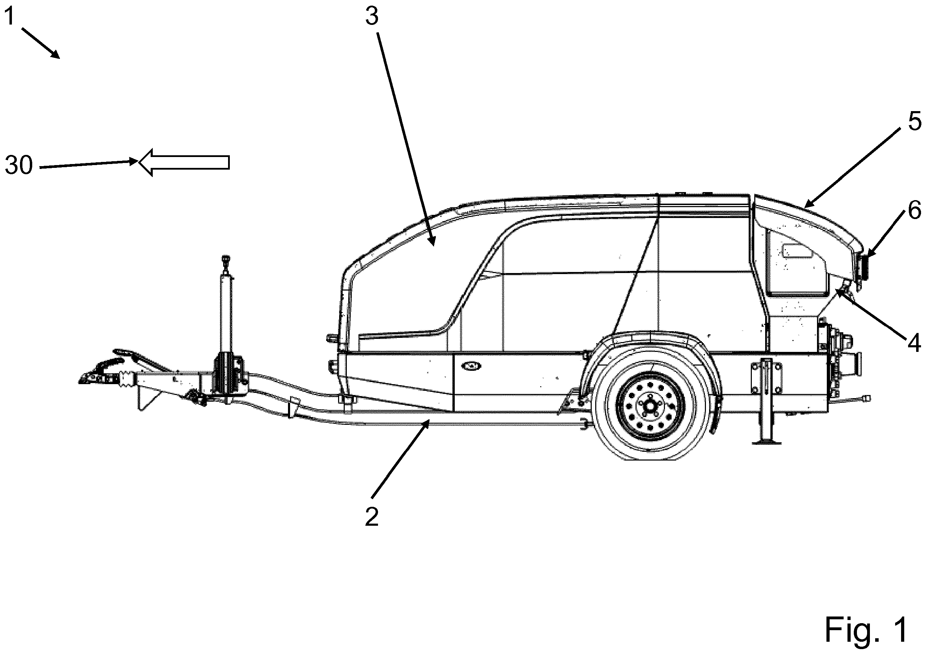

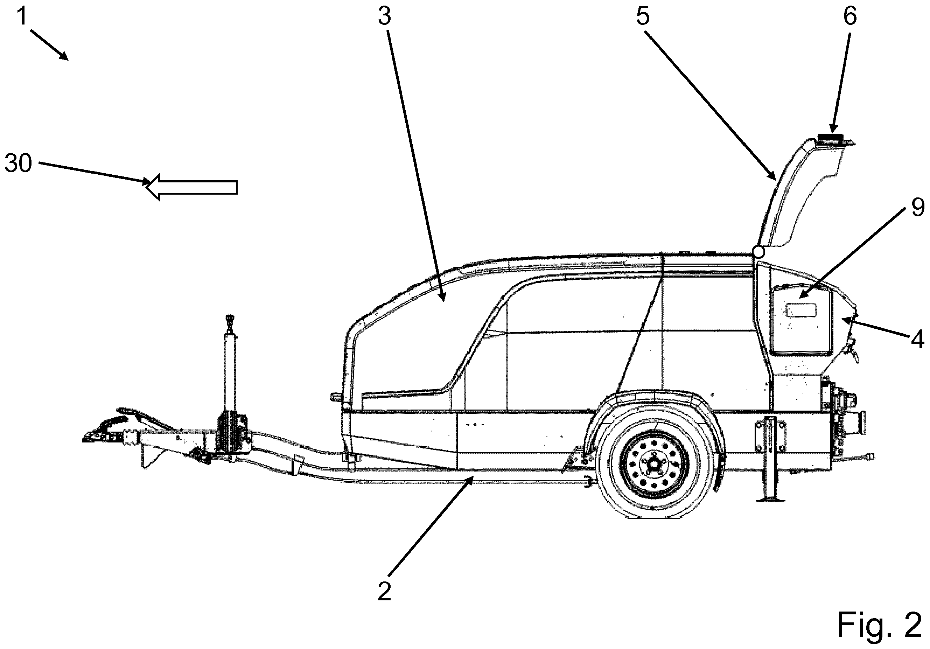

In der Figur 1 mit dem Bezugszeichen 1 bezeichnet ist eine erfindungsgemäße Dickstoffpumpe dargestellt. Die Dickstoffpumpe 1 weist ein Fahrgestell 2 eines Anhängers auf. Auf diesem Fahrgestell 2 ist eine Pumpeinheit 3 angeordnet. Diese Pumpeinheit 3 wird mit zu förderndem Dickstoff über einen Aufgabetrichter 4 versorgt, der rückseitig am Fahrgestell 2 angeordnet ist. Der an der Rückseite des Fahrgestells 2 angeordnete Aufgabetrichter 4 verfügt über einen schwenkbaren Deckel 5, mit dem eine obere Einfüllöffnung des Aufgabetrichters 4 in einer Verschlussschwenkstellung verschlossen werden kann, wie in Figur 1 zu sehen. In einer Öffnungsschwenkstellung, welche in Figur 2 gezeigt ist, kann die Einfüllöffnung des Aufgabetrichters 4 von dem Deckel 5 für die Aufgabe von zu förderndem Dickstoff freigegeben werden. Die Dickstoffpumpe 1 verfügt über eine rückseitig angeordnete Heckbeleuchtung 6. Diese Heckbeleuchtung 6 ist erfindungsgemäß an dem verschwenkbaren Deckel 5 angeordnet und wird, wie aus Figur 2 ersichtlich, mit dem Deckel 5 zusammen verschwenkt. So befindet sich die Heckbeleuchtung 6 in Verschlussschwenkstellung des Deckels 5 gemäß Figur 1 in einer Ausrichtung entgegen der durch den Blockpfeil angedeuteten Fahrtrichtung 30. Mit dieser Ausrichtung entgegen der Fahrtrichtung 30 des Fahrgestells 2 ist die Heckbeleuchtung 6 für nachfolgende Verkehrsteilnehmer gut sichtbar.

Die Figur 2 zeigt die Dickstoffpumpe 1 gemäß Figur 1, wobei hier der Deckel 5 in Öffnungsschwenkstellung nach vorne oben verschwenkt ist. Die mit dem Deckel 5 verschwenkte Heckbeleuchtung 6 befindet sich in dieser Stellung oberhalb des Aufgabetrichters 4. Hierdurch lassen sich Verschmutzungen der Heckbeleuchtung 6 bei Aufgabe von zu förderndem Dickstoff in den Aufgabetrichter 4 einfach vermeiden.

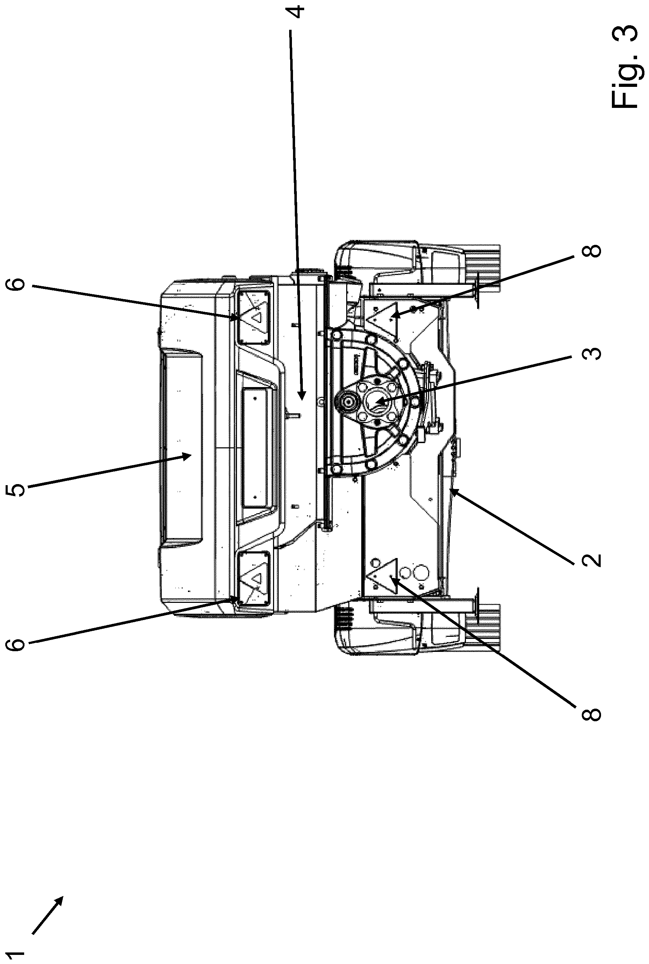

Gemäß Figur 3 ist eine Rückansicht der Dickstoffpumpe 1 aus den Figuren 1 und 2 zu sehen. In dieser Darstellung gut zu erkennen ist, dass die an dem verschwenkbaren Deckel 5 angeordnete Heckbeleuchtung 6, zwei Fahrtrichtungsanzeiger, zwei Schlussleuchten, zwei Bremsleuchten sowie Rückfahrscheinwerfer, Nebelschlussleuchten und eine Kennzeichenbeleuchtung umfasst. Der Aufgabetrichter 4 liegt etwa außermittig, d.h. von hinten betrachtet nach rechts versetzt, und der verschwenkbare Deckel 5 ist etwas breiter als der Aufgabetrichter und deckt gleichzeitig einen Dokumentenbehälter 9 bei verschlossenem Deckel 5 ab, wie aus den Figuren 1 und 2 ersichtlich ist. Bei breiteren Fragzeugen, wie etwa Autobetonpumpen, sind diese Leuchten der Heckbeleuchtung 6 vorzugsweise an einem nicht dargestellten Hilfsrahmen, Winkeln o.ä. befestigt, der an dem Deckel 5 angeordnet ist oder der gesamte Deckel 5 wird entsprechend breiter ausgeführt, insbesondere breiter als der Aufgabetrichter 4, um die Vorschriften für die Anordnung der Rückleuchten einzuhalten. Außerdem sind rückseitig an der Dickstoffpumpe 1 zwei Rückstrahler (Retroreflektoren) 8 angeordnet, die nicht zusammen mit dem Deckel 5 verschwenkt werden. Hierdurch sind diese auch bei Verschwenkung des Deckels 5 in Öffnungsschwenkstellung weiterhin gut sichtbar.

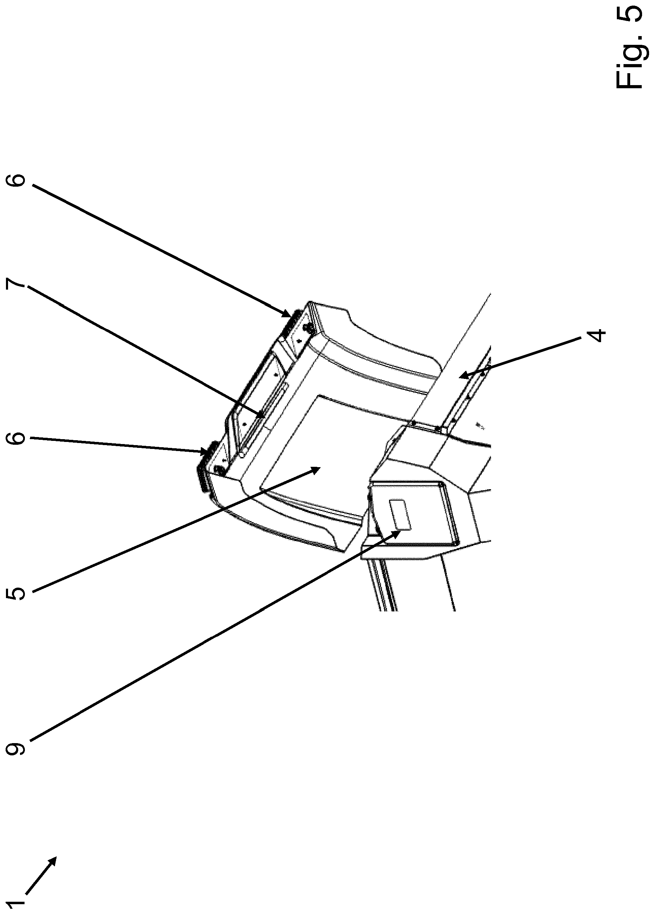

Die Figur 5 stellt eine Detailansicht auf den Deckel 5 in Öffnungsschwenkstellung dar. In dieser Darstellung ist der Blick auf die im Deckel 5 angeordnete Arbeitsleuchte 7 frei, welche den Aufgabetrichter 4, dessen obere Einfüllöffnung, sowie den Bereich um den Aufgabetrichter 4 bei Dämmerung und Dunkelheit von oben beleuchtet.

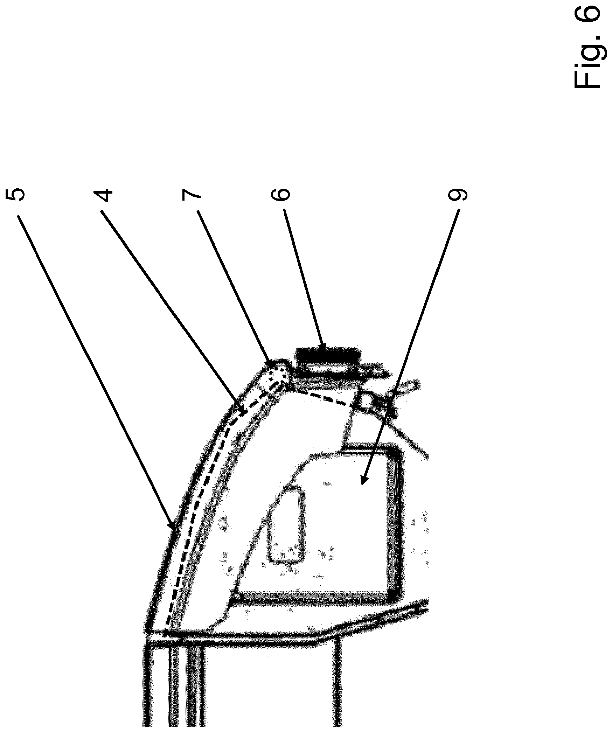

Wie aus Figur 6 ersichtlich, ist der Deckel 5 so ausgeführt, dass die Arbeitsleuchte 7 bei verschlossenem Deckel 5 nicht direkt über dem Aufgabetrichter 4 angeordnet ist, sondern etwas dahinter. Damit wird vermieden, dass die Arbeitsleuchte 7 beim Zurückpumpen des Dickstoffs, welches vorzugsweises bei verschlossenem Deckel 5 stattfindet, verunreinigt wird. Der Deckel 5 ragt dafür etwas nach hinten über den Aufgabetrichter 4 hinaus.

### Bezugszeichenliste

- 1: Mobile Dickstoffpumpe
- 2: Fahrgestell
- 3: Pumpeinheit
- 4: Aufgabetrichter
- 5: Deckel
- 6: Heckbeleuchtung
- 7: Arbeitsleuchte
- 8: Rückstrahler
- 9: Dokumentenbehälter
- 30: Fahrtrichtung

## Patentansprüche

1. Mobile Dickstoffpumpe (1) zur Förderung von Dickstoff, mit
- einem Fahrgestell (2),
- einer auf dem Fahrgestell (2) angeordneten Pumpeinheit (3),
- einem oben offenen Aufgabetrichter (4) zur Aufgabe von zu förderndem Dickstoff,
- einem verschwenkbaren Deckel (5), wobei der Deckel (5) in einer Verschlussschwenkstellung die obere Einfüllöffnung des Aufgabetrichters (4) verschließt und in einer Öffnungsschwenkstellung die Einfüllöffnung des Aufgabetrichters (4) freigibt, und
- einer Heckbeleuchtung (6),
**dadurch gekennzeichnet,**
**dass** die Heckbeleuchtung (6) an dem verschwenkbaren Deckel (5) angeordnet ist und zusammen mit dem Deckel (5) verschwenkbar ist.

2. Dickstoffpumpe (1) nach Anspruch 1, **dadurch gekennzeichnet, dass** die Heckbeleuchtung (6) in Verschlussschwenkstellung des Deckels (5) entgegen der Fahrtrichtung (30) des Fahrgestells (2) ausgerichtet ist.

3. Dickstoffpumpe (1) nach Anspruch 1 oder 2, **dadurch gekennzeichnet, dass** der Deckel (5) im Bereich seiner fahrtrichtungsseitigen Kante verschwenkbar angelenkt ist, so dass er aus der Verschlussschwenkstellung, in der der Deckel (5) im Wesentlichen horizontal ausgerichtet ist, in die Öffnungsschwenkstellung, in der der Deckel (5) im Wesentlichen vertikal ausgerichtet ist, in Fahrtrichtung (30) nach oben verschwenkt wird.

4. Dickstoffpumpe (1) nach einem der vorhergehenden Ansprüche, **dadurch gekennzeichnet, dass** die Heckbeleuchtung (6) über einen Hilfsrahmen an dem Deckel (5) befestigt ist.

5. Dickstoffpumpe (1) nach Anspruch 4, **dadurch gekennzeichnet, dass** der Hilfsrahmen über die Breite des Deckels (5) quer zur Fahrtrichtung (30) des Fahrgestells (2) hinausragt und die Heckbeleuchtung (6) zumindest teilweise in Fahrtrichtung (30) des Fahrgestells (2) versetzt seitlich neben dem Deckel (5) an dem Hilfsrahmen angeordnet ist.

6. Dickstoffpumpe (1) nach einem der vorhergehenden Ansprüche, **dadurch gekennzeichnet, dass** an dem Deckel (5) eine Arbeitsleuchte (7) angeordnet ist, die in Öffnungsschwenkstellung des Deckels (5) den Aufgabetrichter (4) von oben beleuchtet.

## Claims

1. Mobile thick-matter pump (1) for conveying thick matter, comprising
- a chassis (2),
- a pump unit (3) arranged on the chassis (2),
- a feeding hopper (4), open at the top, for feeding thick matter to be conveyed,
- a pivoting cover (5), wherein the cover (5) closes the top filler opening of the feeding hopper (4) in a closed pivoted position and uncovers the filler opening of the feeding hopper (4) in an open pivoted position, and
- a rear light assembly (6),
**characterised in that**
the rear light assembly (6) is arranged on the pivoting cover (5) and is pivotable together with the cover (5).

2. Thick-matter pump (1) according to claim 1, **characterised in that** the rear light assembly (6) is oriented against the direction of travel (30) of the chassis (2) when the cover (5) is in the closed pivoted position.

3. Thick-matter pump (1) according to claim 1 or 2, **characterised in that** the cover (5) is pivotably hinged in the region of the edge thereof on the direction of travel side, such that it is pivoted upward in the direction of travel (30) from the closed pivoted position, in which the cover (5) is oriented substantially horizontally, into the open pivoted position, in which the cover (5) is oriented substantially vertically.

4. Thick-matter pump (1) according to one of the preceding claims, **characterised in that** the rear light assembly (6) is attached to the cover (5) by means of a subframe.

5. Thick-matter pump (1) according to claim 4, **characterised in that** the subframe projects beyond the width of the cover (5) transversely to the direction of travel (30) of the chassis (2), and the rear light assembly (6) is arranged on the subframe laterally adjacent to the cover (5), at least partly offset in the direction of travel (30) of the chassis (2).

6. Thick-matter pump (1) according to one of the preceding claims, **characterised in that** a work lamp (7) is arranged on the cover (5) and illuminates the feeding hopper (4) from above when the cover (5) is in the open pivoted position.

## Revendications

1. Pompe mobile à matières épaisses (1) pour convoyer des matières épaisses, avec
- un châssis (2),
- une unité de pompage (3) disposée sur le châssis (2),
- une trémie de distribution (4) ouverte en haut pour distribuer des matières épaisses à convoyer,
- un couvercle (5) pivotable, dans laquelle le couvercle (5) ferme dans une position de pivotement de fermeture l'ouverture de remplissage supérieure de la trémie de distribution (4) et dégage, dans une position de pivotement d'ouverture, l'ouverture de remplissage de la trémie de distribution (4), et
- un éclairage arrière (6),
**caractérisé en ce**
**que** l'éclairage arrière (6) est disposé sur le couvercle (5) pivotable et est pivotable conjointement avec le couvercle (5).

2. Pompe à matières épaisses (1) selon la revendication 1, **caractérisée en ce que** l'éclairage arrière (6) est orienté, en position de pivotement de fermeture du couvercle (5), dans le sens opposé au sens de déplacement (30) du châssis (2).

3. Pompe à matières épaisses (1) selon la revendication 1 ou 2, **caractérisée en ce que** le couvercle (5) est articulé de manière à pouvoir pivoter dans la zone de son arête côté sens de déplacement de sorte qu'il est pivoté vers le haut dans le sens de déplacement (30) depuis la position de pivotement de fermeture, dans laquelle le couvercle (5) est orienté sensiblement horizontalement, dans la position de pivotement d'ouverture, dans laquelle le couvercle (5) est orienté sensiblement verticalement.

4. Pompe à matières solides (1) selon l'une quelconque des revendications précédentes, **caractérisée en ce que** l'éclairage arrière (6) est fixé sur le couvercle (5) par l'intermédiaire d'un cadre auxiliaire.

5. Pompe à matières épaisses (1) selon la revendication 4, **caractérisée en ce que** le cadre auxiliaire dépasse au-delà de la largeur du couvercle (5) de manière transversale par rapport au sens de déplacement (30) du châssis (2) et l'éclairage arrière (6) est disposé sur le cadre auxiliaire à côté du couvercle (5) avec un décalage latéral au moins en partie dans le sens de déplacement (30) du châssis (2).

6. Pompe à matières épaisses (1) selon l'une quelconque des revendications précédentes, **caractérisée en ce qu'**est disposée sur le couvercle (5) une lampe de travail (7), qui éclaire depuis le haut la trémie de distribution (4) en position de pivotement d'ouverture du couvercle (5).
